(19) Europäisches Patentamt
European Patent Office
Office européen des brevets

(11) **EP 3 069 167 B1**

(12) **EUROPEAN PATENT SPECIFICATION**

(45) Date of publication and mention
of the grant of the patent:
**11.01.2023 Bulletin 2023/02**

(21) Application number: **14801984.7**

(22) Date of filing: **13.11.2014**

(51) International Patent Classification (IPC):
**G01S 7/4865** (2020.01)    **G01S 17/10** (2020.01)
**G01S 17/931** (2020.01)    **G01S 7/4915** (2020.01)
**G01S 17/32** (2020.01)    **G01S 17/894** (2020.01)

(52) Cooperative Patent Classification (CPC):
**G01S 17/10; G01S 7/4865; G01S 17/931;**
G01S 7/4915; G01S 17/32; G01S 17/894

(86) International application number:
**PCT/EP2014/074484**

(87) International publication number:
**WO 2015/071358 (21.05.2015 Gazette 2015/20)**

(54) **METHOD FOR ILLUMINATING AN OBJECT AND FOR DETERMINING A DISTANCE**

VERFAHREN ZUR BELEUCHTUNG EINES OBJEKTS UND ZUR BESTIMMUNG EINER
ENTFERNUNG

PROCÉDÉ D'ÉCLAIRAGE D'UN OBJET ET DE DÉTERMINATION D'UNE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2013 DE 102013112553**

(43) Date of publication of application:
**21.09.2016 Bulletin 2016/38**

(73) Proprietor: **Odos Imaging Ltd.
Edinburgh EH9 3JF (GB)**

(72) Inventors:
• **YATES, Chris
Edinburgh EH12 7AB (GB)**
• **SOFTLEY, Chris
Gorebridge EH23 4RB (GB)**

(74) Representative: **Grünecker Patent- und
Rechtsanwälte
PartG mbB
Leopoldstraße 4
80802 München (DE)**

(56) References cited:
**DE-A1- 19 741 887        DE-A1- 19 833 207
DE-A1-102011 081 384    US-B2- 7 212 278**

**Description**

The invention relates to a method for illuminating an object.

Distance values can be measured between a measuring device and an object without a physical contact between the device and the object by optical methods. In these methods, the object is illuminated by the device and the light back reflected from the object is then captured by a light detector of the device.

Distance values can for example be determined by periodically modulating the light intensity which is emitted from the device and by measuring the phase difference between the emitted light and the back reflected light arriving on the detector. However, due to the periodicity of the light intensity this method results in an ambiguous distance measurement. Unambiguous distance values can be determined by measuring the time of flight between the emission of light and the arrival of the back reflected light on the detector.

In certain situations it is required to illuminate a scene such that it becomes visible for the human eye, or other additional vision systems, however, this illumination of the scene can interfere with an optical distance measurement, whereby the precision of the optical distance measurement is reduced.

DE 10 2011 081 384 A1 discloses a method for the determination of a distance for a vehicle. DE 198 33 207 A1 discloses a method and device for generating three-dimensional distance images of spatial objects. US 7,212,278 B2 discloses methods and devices for recording three-dimensional distance-measuring images of an object surface.

DE 19741 887 A1 discloses a device for measuring transit time of light in transparent media. The device comprises a laser diode, which transmits a continuous beam of light interrupted by short dark phases.

It is an object of the invention to provide an illumination device and a method for illuminating the object, wherein a distance measurement with a high precision can be carried out.

The first inventive method for illuminating an object for a human user, or other vision system, to be able to view the object with an unaided eye by means of an illumination device that comprises a light source for illuminating the object and at least one photo element that is adapted to capture the light emitted by the light source after being back reflected from the object, to be activated during a temporal integration gate and to output a signal value U at the end of the integration gate with the signal value U being proportional to the energy of light arriving on the photo element during its activation, and for determining a distance value R between the object and the illumination device comprises the steps: a) illuminating the object with the light source and switching the light intensity of the light source at a point in time $T_0$ from an intensity $I_{out,h}$ to an intensity $I_{out,l}$ being lower than $I_{out,h}$ as well as switching its intensity at a point in time $T_0+T_n$ back to $I_{out,h}$, wherein the light arriving on the photo element corresponding to the emitted intensity $I_{out,h}$ has an intensity $I_{in,h}$ and the light arriving on the photo element corresponding to the emitted intensity $I_{out,l}$ has an intensity $I_{in,l}$; a1) measuring the intensity $I_{in} = I_{in,h} - I_{in,l}$ by means of the photo element by measuring a signal value $U_2$ within a second integration gate; b) outputting a signal value U at the end of the integration gate of the photo element, wherein the integration gate has such a predetermined delay to To that either $T_{tof}$ or $T_{tof}+T_n$ is between an integration start point in time $T_{sd}$ of the integration gate and an integration end point in time $T_{sd}+T_s$ of the integration gate, with $T_{tof}$ being the first point in time when light with the intensity $I_{in,l}$ arrives on the photo element, wherein $T_s$ is longer than $T_n$, wherein $T_{s2}$ is longer than $T_n$ and wherein the second integration gate has such a delay to $T_0$ that the integration end point in time $T_{sd2}+T_{s2}$ is earlier than $T_{tof}$ or the integration start point in time $T_{sd2}$ is later than $T_{tof}+T_{n'}$ or wherein $T_{s2}$ is longer than $T_n$ and wherein the second integration gate has such a delay to $T_0$ that the integration start point in time $T_{sd2}$ is earlier than $T_{tof}$ and the integration end point in time $T_{sd2}+T_{s2}$ is later than $T_{tof}+T_n$; c) calculating the distance value R from U and $I_{in}$.

The second inventive method for illuminating an object for a human user, or other vision system, to be able to view the object with an unaided eye by means of an illumination device that comprises a light source for illuminating the object and at least one photo element that is adapted to capture the light emitted by the light source after being back reflected from the object, to be activated during a temporal integration gate and to output a signal value U at the end of the integration gate with the signal value U being proportional to the energy of light arriving on the photo element during its activation, and for determining a distance value R between the object and the illumination device comprises the steps: a) illuminating the object with the light source and switching the light intensity of the light source at a point in time $T_0$ from an intensity $I_{out,h}$ to an intensity $I_{out,l}$ being lower than $I_{out,h}$ as well as switching its intensity at a point in time $T_0+T_n$ back to $I_{out,h}$, wherein the light arriving on the photo element corresponding to the emitted intensity $I_{out,h}$ has an intensity $I_{in,h}$ and the light arriving on the photo element corresponding to the emitted intensity $I_{out,l}$ has an intensity $I_{in,l}$; b) outputting a signal value U at the end of the integration gate of the photo element, wherein the integration gate has such a predetermined delay to $T_0$ that either $T_{tof}$ or $T_{tof}+T_n$ is between an integration start point in time $T_{sd}$ of the integration gate and an integration end point in time $T_{sd}+T_s$ of the integration gate, with $T_{tof}$ being the first point in time when light with the intensity $I_{in,l}$ arrives on the photo element, wherein $T_s$ is longer than Tn; b1) if $T_{tof}$ is between $T_{sd}$ and $T_{sd}+T_s$: outputting a signal value $U_2$ at the end of a second integration gate having an integration start point in time $T_{sd2}$ being later than $T_{sd}$ and an integration end point in time $T_{sd2}+T_s$, wherein $T_{tof}$ is between $T_{sd2}$ and $T_{sd}+T_s$ and wherein $T_{tof}+T_n$ is later than $T_{sd2}+T_s$, or b1') if $T_{tof}+T_n$ is between $T_{sd}$ and $T_{sd}+T_s$: outputting a signal value $U_2$ at the end of a second integration gate having an integration start point in time $T_{sd2}$ being later than $T_{sd}$ and an integration end point in time $T_{sd2}+T_s$, wherein $T_{tof}+T_n$ is between $T_{sd2}$ and $T_{sd}+T_s$ and wherein $T_{tof}$ is earlier than $T_{sd}$; c) calculating the distance value R from U and $U_2$.

The signal value U can be measured directly, for example if a CCD chip or CMOS image sensor is used. The charge measured at the end of the integration gate is proportional to the energy of the light arriving on the photo element during its activation and therefore the signal value U, which is proportional to the charge, is proportional to the energy of the light. On the other hand, the signal value U can be determined indirectly if the relation between a measured value and the energy of the light arriving on the photo element during its activation is known. For example, if the photo element comprises a condenser that is discharged via a photodiode during the activation of the photo element the measured value is a voltage that is approximately inversely proportional to the energy of the light arriving on the photo element during its activation.

With the methods according to the invention the light emitted by the light source is used for both illuminating the object to make it visible for the human eye, or other vision systems, and determining the distance value R between the object and the illumination device. Since the light source is used for both illuminating the scene and for measuring the distance an extra light source, that would interfere with the distance measurement, needs advantageously not be provided. Due to the lack of the extra light source the amount of unwanted background light arriving on the photo element is reduced, whereby the distance value R can be determined with a high precision.

For all the methods according to the invention the duration $T_s$ of the integration gate is longer than the duration $T_n$, during which the light source emits the lower intensity $I_{out,l}$. Therefore, photo elements can be used that only enable integration gates being longer than $T_n$. Such photo elements are advantageously more cost-efficient than photo elements that enable integration gates being shorter than or equal to $T_n$.

Background radiation, for example sun-light, leads to an error for the determination of the distance R. If the duration $T_s$ of the integration gate is increased, the amount of the background radiation that is captured within the integration is increased but at the same time the amount of light that is emitted by the light source, subsequently back reflected from the object, and arriving within the integration gate is increased. The background radiation leads to the error for the determination of the distance R but this error is not increased if the duration $T_s$ of the integration gate is increased. That the error is not increased if the duration $T_s$ is increased is not the case when for illuminating the object a light pulse is used. In case the light pulse is used, only the amount of background radiation that arrives on the photo element during the integration gate is increased by increasing the duration $T_s$. Therefore, in case the light pulse is used and the duration $T_s$ is increased, this leads to an increase of the error for the determination of the distance R.

The light source of the illumination device can for example be the headlamps of an automobile whose primary purpose is to illuminate the road but at the same time can be used to measure the distance to another automobile being in front of the automobile. The distance between both automobiles can possibly be used as an input to an intelligent anti-collision system. The duration $T_n$ during which the intensity of the light source is reduced from $I_{out,h}$ to $I_{out,l}$ is in the order of nanoseconds or picoseconds and therefore the duration $T_n$ is so fast that the switching of the light intensity can advantageously not be perceived by the human eye, or other vision systems with response times greater than these timescales. Furthermore, the illumination of the object is not required to be constant; a modulated light source, e.g. with a frequency of 50 or 60 Hz, can also be used.

It is preferred that the light source comprises light emitting diodes, VCSELs (vertical-cavity surface-emitting laser) and/or lasers. The illumination device comprises preferably a CCD chip with an image intensifier and/or a CMOS chip that comprise the at least one photo element. It is furthermore preferred that the illumination device comprises a single photo element, a linear array of photo elements or a two dimensional array of photo elements.

Preferably, $I_{out,l}$ is zero. With $I_{out,l}$ being zero, the energy of light arriving on the photo element during its activation is reduced and the signal value U can be determined with a high dynamic. With the high dynamic of the signal value U a high precision for the determination of the distance value R can be achieved.

For the first inventive method, it is possible to measure U and $U_2$ either consecutively by using for both measurements one photo element or to measure U and $U_2$ simultaneously by using two photo elements. The two photo elements can be arranged adjacent to each other. Alternatively, it is possible to split the incoming light by a beam splitter and direct each split portion of the light onto a respective photo element.

For the first inventive method, it is preferred that the second integration gate has such a delay to $T_0$ that the integration end point in time $T_{sd2}+T_{s2}$ is earlier than $T_{tof}$ or the integration start point in time $T_{sd2}$ is later than $T_{tof}+T_n$. From the known duration $T_{s2}$ of the second integration gate and the signal value $U_2$ it is possible to calculate the difference in intensity $I_{in}$ between the light arriving on the photo element corresponding to the lower level and the light arriving on the photo element corresponding to the higher level. If $I_{in,l}$ is zero one can directly calculate $I_{in}$ by

$$I_{in} = \frac{U_2}{T_{s2}} \quad \text{(eq. 1)}.$$

If $I_{in,l}$ is non-zero $I_{in}$ is calculated from $I_{in} = U_2/T_{s2} - I_{in,l}$ and the known ratio $I_{out,h}/I_{out,l} = I_{in,h}/I_{in,l}$ and results in

$$I_{in} = \frac{U_2}{T_{s2}}\left(1 - \frac{I_{out,l}}{I_{out,h}}\right) \quad (\text{eq. 2}).$$

Alternatively, for the first inventive method, it is preferred that the second integration gate has such a delay to $T_0$ that the integration start point in time $T_{sd2}$ is earlier than $T_{tof}$ and the integration end point in time $T_{sd2}+T_{s2}$ is later than $T_{tof}+T_n$. The intensity $I_{in}$ can be analogously determined by using the known duration of the second integration gate $T_{s2}$ and the duration $T_n$, during which the intensity is switched to lower intensity level and the known ratio $I_{out,h}/I_{out,l} = I_{in,h}/I_{in,l}$.

In the case that $T_{tof}+T_n$ is between $T_{sd}$ and $T_{sd}+T_s$ and under the assumption that $I_{in,l}$ is zero $T_{tof}$ can be calculated by

$$T_{tof} = T_{sd} + T_s - T_n - \frac{U}{I_{in}} \quad (\text{eq. 3}).$$

In the case that $T_{tof}$ is between $T_{sd}$ and $T_{sd}+T_s$ and under the assumption that $I_{in,l}$ is zero $T_{tof}$ can be calculated by

$$T_{tof} = T_{sd} + \frac{U}{I_{in}} \quad (\text{eq. 4}).$$

For the second inventive method, $T_s$ is identical for both the first and the second integration gate. For the case that $T_{tof}$ is between $T_{sd2}$ and $T_{sd}+T_s$ and $T_{tof}+T_n$ is later than $T_{sd2}+T_s$, $T_{tof}$ can be calculated by:

$$T_{tof} = -U\frac{T_{sd2} - T_{sd}}{U_2 - U} + T_{sd} \quad (\text{eq. 5}).$$

For the case that $T_{tof}+T_n$ is between $T_{sd2}$ and $T_{sd}+T_s$ and $T_{tof}$ is earlier than $T_{sd}$, $T_{tof}$ can be calculated by:

$$T_{tof} = -U\frac{T_{sd2} - T_{sd}}{U_2 - U} + T_{sd} + T_s - T_N \quad (\text{eq. 6}).$$

For both cases of the second inventive method it is possible to measure U and $U_2$ either consecutively by using for both measurements one photo element or to measure U and $U_2$ simultaneously by using two photo elements. The two photo elements can be arranged adjacent to each other. Alternatively, it is possible to split the incoming light by a beam splitter and direct each split portion of the light onto a respective photo element.

In the following the invention is explained on the basis of schematic drawings.

Figure 1 shows a schematic cross section through an illumination device according to a first embodiment and a second embodiment of the invention,
Figure 2 shows temporal profile diagrams with intensities and an integration gate according to the first embodiment and the second embodiment,
Figure 3 shows temporal profile diagrams with intensities and an integration gate according to the first embodiment,
Figure 4 shows a schematic cross section through an illumination device according to a comparative example,
Figure 5 shows a sequence of temporal profile diagrams with intensities and different integration gates according to the comparative example,
Figure 6 shows a correlation function determined according to the comparative example, and
Figure 7 shows temporal profile diagrams with intensities and an integration gate according to the second embodiment.

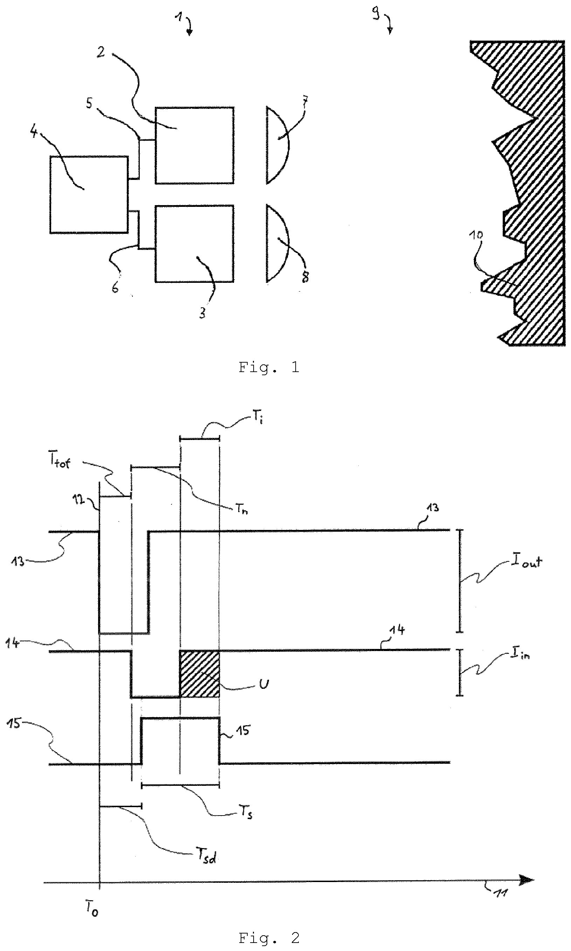

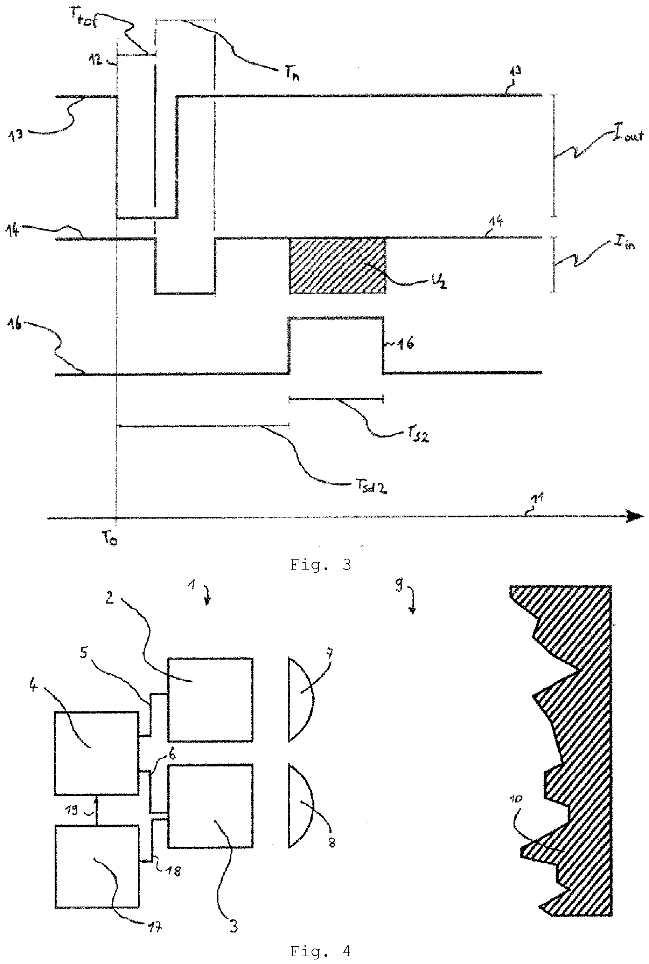

As it can be seen in Figures 1 and 4 an illumination device 1 comprises a light source 2, a photo element 3 and a trigger generator 4. The trigger generator 4 provides an activation signal 5 for switching the intensity of the light source 2 between two different intensities $I_{out,h}$ and $I_{out,l}$, wherein $I_{out,l} < I_{out,h}$. The intensity $I_{out,h}$ is chosen such that an object 10 is illuminated such that it can be seen with an unaided eye. Alternatively, the intensity $I_{out,h}$ is chosen such that it can be seen by another vision system. Detection optics 8 are arranged in front of the photo element 3 in order to image a field of view 9 onto the photo element 3. Illumination optics 7 are arranged in front of the light source 2 in order to shape the light emitted by the light source 2 such that the field of view 9 can be illuminated by the light source 2. The illumination device 1 is adapted such that the light emitted by light source 2 impinges onto an object 10 placed within the field of view 9, is back reflected from the object 10 and arrives on the photo element 3 after being back reflected from the object 10. The illumination optics 7 and the detection optics 8 are preferably a respective lens. It is also possible to use a single lens for the both the illumination optics 7 and the detection optics 8.

In the first embodiment according to Figures 1 to 3, the trigger generator 4 provides an activation signal 6 for activating the photo element 3 during a first temporal integration gate 15 and during a second temporal integration gate 16. The photo element 3 is adapted to output a signal value U that is proportional to the energy of light arriving on the photo element 3 during the first integration gate 15 and to output a signal value $U_2$ that is proportional to the energy of light arriving on the photo element 3 during the second integration gate 16.

In Figures 2 and 3 two temporal profile diagrams are shown in which the intensity 12 is plotted versus time 11. Shown in both diagrams are the intensity 13 of the light emitted by the light source 2 and the intensity 14 of the light arriving on the photo element 3, wherein the intensity 14 is lower than the intensity 13. The trigger generator 4 provides the activation signal 5 such that the light source 2 switches its intensity at a point in time $T_0$ from $I_{out,h}$ to $I_{out,l}$ and at a point in time $T_0+T_n$ from $I_{out,l}$ to $I_{out,h}$. The intensity 14 of the light arriving on the photo element 3 corresponding to the emitted intensity $I_{out,h}$ has an intensity $I_{in,h}$ and the light arriving on the photo element 3 corresponding to the emitted intensity $I_{out,l}$ has an intensity $I_{in,l}$.

The time difference $T_{tof}$ between $T_0$ and the first point in time when light with the intensity $I_{in,l}$ arrives on the photo element corresponds to the time of flight of the light from the emission of the light source 2 until the arrival on the photo element 3. A distance value R between the illumination device 1 and the object 10 can be calculated from $T_{tof}$ by using equation 8. Figure 2 shows the first integration gate 15 that has an integration start point in time $T_{sd}$ and an integration end point in time $T_{sd}+T_s$. $T_{sd}$ is chosen such that it is between $T_{tof}$ and $T_{tof}+T_n$ and $T_{sd}+T_s$ is chosen such that it is later than $T_{tof}+T_n$. The second integration gate 16 is shown in Figure 3 and has an integration start point in time $T_{sd2}$ and an integration end point in time $T_{sd2}+T_{s2}$, wherein $T_{sd2}$ is chosen such that it is later than $T_{tof}+T_n$. For the first embodiment it is the case that $T_s > T_n$ and also that $T_{s2} > T_n$.

Figures 2 and 3 depict the case in which $I_{out,l} = I_{in,l} = 0$.

Therefore, the signal value U corresponds to the hatched area in Figure 2 and the signal value $U_2$ corresponds to the hatched area in Figure 3. As it can be seen in Figure 2, the signal value U can be calculated by $U=T_i*I_{in}$, wherein $I_{in} = I_{in,h}-I_{in,l} = I_{in,h}$ and $T_i$ is the duration during which light arrives on the photo element 3 during its activation. By measuring the signal value $U_2$ with the second integration gate 16 it is possible to determine the intensity $I_{in}$ according to equation 1. From the equation $T_{sd}+T_s = T_{tof}+T_n+T_i$ it is now possible to derive equation 3.

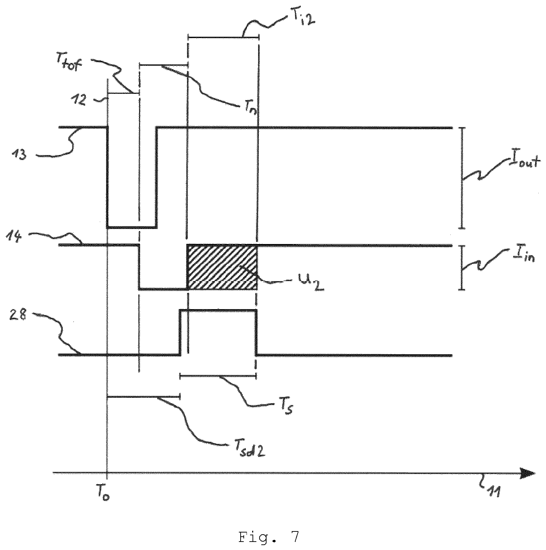

The second embodiment according to Figures 2 and 7 differs from the first embodiment according to Figures 2 and 3 therein that the second integration gate 28 according to Figure 7 also splits the duration $T_n$ during which light with the lower intensity arrives on the photo element 3. Therefore, the integration start point in time $T_{sd2}$ of the second integration gate 28 is between $T_{tof}$ and $T_{tof}+T_n$ and $T_{sd2}$ is later than $T_{sd}$. The duration $T_s$ of the first integration gate 15 and the second integration gate 28 is the same. Also for the second embodiment it is the case that $T_s > T_n$.

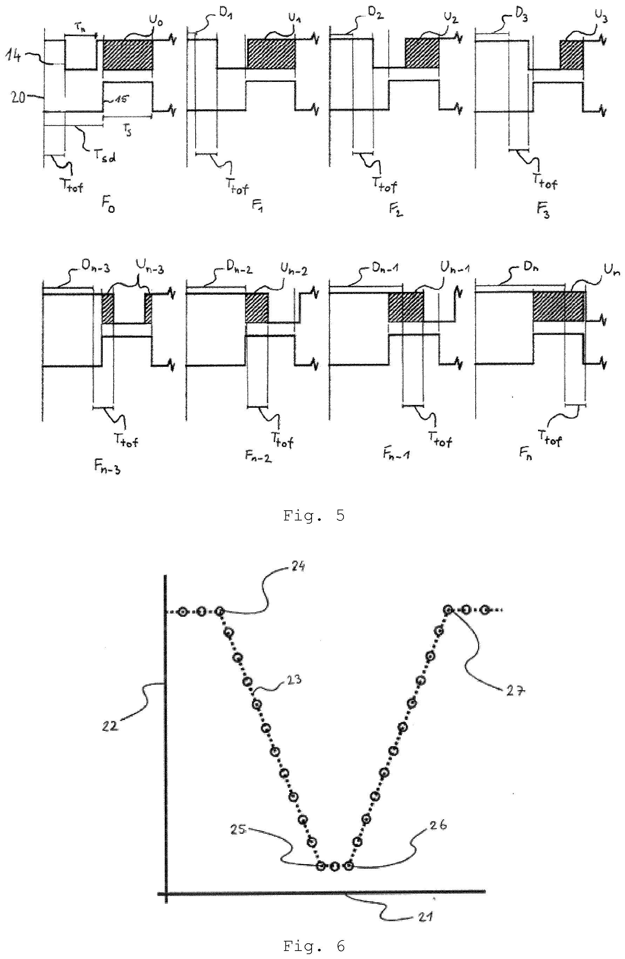

In the comparative example according to Figures 4 to 6 a sequence of signal values $U_0$, $U_1$, $U_2$,...$U_n$ is measured in subsequent acquisition cycles $F_0$, $F_1$, $F_2$,... $F_n$, wherein the signal value $U_x$ is measured in acquisition cycle $F_x$. Each acquisition cycle has a fixed delay $T_{sd}$ from a time zero 20, after which the photo element 3 is activated, and a variable delay $D_0$, $D_1$, $D_2$,... $D_n$ from the time zero 20 to the point in time in which the intensity of the light source is switched from $I_{out,h}$ to $I_{out,l}$, wherein $D_x$ depicts the delay in the acquisition cycle $F_x$. Figure 5 shows that in the acquisition cycle $F_0$ it is: $D_0=0$ and in each subsequent acquisition cycle D is increased. The pairs of signal values U and delays D are stored in a memory unit 17 of the illumination device 1 so that they can be further processed for determining the time of flight $T_{tof}$.

Figure 6 shows a diagram wherein the signal values U 22 are plotted versus the respective delays D 21 as determined with the trigger schemes of Figure 5. In Figure 5 the duration of the integration gate $T_s$ is chosen such that it is longer than the duration $T_n$ during which the intensity of the light source is switched to the lower intensity level. The plot shows a correlation function 23 which has characteristic points (24 to 27) that can be evaluated so that $T_{tof}$ can be derived. The first point in time 24 corresponds to $D+T_{tof}+T_n$ being equal to $T_{sd}$, the second point in time 25 corresponds to $D+T_{tof}$ being equal $T_{sd}$, the third point in time 26 corresponds to $D+T_{tof}+T_n$ being equal to $T_{sd}+T_s$ and the fourth point in time 27 corresponds to $D+T_{tof}$ being equal $T_{sd}+T_s$.

In the following the invention is explained on the basis of two examples.

In a first example an illumination device comprises a light source 2 and at least one photo element 3 adapted to capture the light emitted by the light source 2 after being back reflected from an object 10 and to output a signal value U at the end of a first integration gate 15 and to output a signal value $U_2$ at the end of a second integration gate 16 with the signal values U and $U_2$ being proportional to the energy of light arriving on the photo element 3 during the respective integration gate 15, 16 and the method is carried out with the steps: a) illuminating an object 10 with the light source 2 of the illumination device 1 and switching the light intensity of the light source 2 at a point in time $T_0$ from an intensity $I_{out,h}$ to zero as well as switching its intensity at a point in time $T_0+T_n$ back to $I_{out,h}$, wherein the light arriving on the photo element 3 corresponding to the emitted intensity $I_{out,h}$ has an intensity $I_{in} = I_{in,h}$; b) outputting a signal value U at the end of the first integration gate 15 of the photo element 3, wherein the first integration gate 15 has such a predetermined delay to $T_0$ that $T_{tof}+T_n$ is between an integration start point in time $T_{sd}$ of the first integration gate 15 and an integration end point in time $T_{sd}+T_s$ of the first integration gate 15 and $T_{tof}$ is earlier than $T_{sd}$, with $T_{tof}$ being the first point in time when light with the intensity of zero arrives on the photo element 3, wherein $T_s > T_n$; measuring the intensity $I_{in}$ by means of the photo element 3 by measuring the signal value $U_2$ within the second integration gate 16 having an integration start point in time $T_{sd2}$ and an integration end point in time $T_{sd2}+T_{s2}$, wherein $T_{sd2}$ is chosen such that it is later than $T_{tof}+T_n$, wherein $T_s > T_n$; c) calculating a distance value R between the illumination device 1 and the object 10 by using equations 1 and 3.

In a second example the method is carried out with the illumination device of the first example and the steps: a) illuminating an object 10 with the light source 2 of the illumination device 1 and switching the light intensity of the light source 2 at a point in time $T_0$ from an intensity $I_{out,h}$ to zero as well as switching its intensity at a point in time $T_0+T_n$ back to $I_{out,h}$, wherein the light arriving on the photo element 3 corresponding to the emitted intensity $I_{out,h}$ has an intensity $I_{in}$; b) outputting a signal value U at the end of the first integration gate 15 of the photo element 3, wherein the first integration gate 15 has such a predetermined delay to To that $T_{tof}$ is between an integration start point in time $T_{sd}$ of the first integration gate 15 and an integration end point in time $T_{sd}+T_s$ of the first integration gate 15 and $T_{tof}$ is earlier than $T_{sd}$, with $T_{tof}$ being the first point in time when light with the intensity of zero arrives on the photo element 3, wherein $T_s > T_n$; b1) outputting the signal value $U_2$ at the end of the second integration gate (28) having an integration start point in time $T_{sd2}$ being later than $T_{sd}$ and an integration end point in time $T_{sd2}+T_s$, wherein $T_{tof}$ is between $T_{sd2}$ and $T_{sd}+T_s$ and wherein $T_{tof}+T_n$ is later than $T_{sd2}+T_s$; c) calculate a distance value R between the illumination device 1 and the object 10 by using equation 5.

List of reference signs

| | |
|---|---|
| 1 | Illumination device |
| 2 | light source |
| 3 | photo element |
| 4 | trigger generator |
| 5 | activation signal for light source |
| 6 | activation signal for photo-active element |
| 7 | illumination optics |
| 8 | detection optics |
| 9 | field of view |
| 10 | object |
| 11 | time |
| 12 | intensity |
| 13 | emitted light intensity |
| 14 | light intensity arriving on the photo element |
| 15 | first integration gate |
| 16 | second integration gate |
| 17 | memory unit |
| 18 | data transfer photo-active element - memory unit |
| 19 | data transfer memory unit - processing unit |
| 20 | time zero |
| 21 | delay D |
| 22 | signal value U |
| 23 | correlation function |
| 24 | first point in time |
| 25 | second point in time |
| 26 | third point in time |
| 27 | fourth point in time |
| 28 | second integration gate |

**Claims**

1. Method for illuminating an object (10) for a human user, or other vision system, to be able to view the object (10) with an unaided eye by means of an illumination device (1) that comprises a light source (2) for illuminating the object (10) and at least one photo element (3) that is adapted to capture the light emitted by the light source (2) after being back reflected from the object (10), to be activated during a temporal integration gate (15) and to output a signal value $U$ at the end of the integration gate (15) with the signal value U being proportional to the energy of light arriving on the photo element (3) during its activation, and for determining a distance value R between the object (10) and the illumination device (1) with the steps:

   a) illuminating the object (10) with the light source (2) and switching the light intensity of the light source (2) at a point in time $T_o$ from an intensity $I_{out,h}$ to an intensity $I_{out,l}$ being lower than $I_{out,h}$ as well as switching its intensity at a point in time $T_o+T_n$ back to $I_{out,h}$, wherein the light arriving on the photo element (3) corresponding to the emitted intensity $I_{out,h}$ has an intensity $I_{in,h}$ and the light arriving on the photo element (3) corresponding to the emitted intensity $I_{out,l}$ has an intensity $I_{in,l}$;
   a1) measuring the intensity $I_{in,i}; = I_{in,h} - I_{in,l}$ by means of the photo element (3) by measuring a signal value $U_2$ within a second integration gate (16);
   b) outputting a signal value $U$ at the end of the integration gate (15) of the photo element (3), wherein the integration gate (15) has such a predetermined delay to $T_o$ that either $T_{tof}$ or $T_{tof}+T_n$ is between an integration start point in time $T_{sd}$ of the integration gate and an integration end point in time $T_{sd}+T_s$ the integration gate, with $T_{tof}$ being the first point in time when light with the intensity $I_{in,l}$ arrives on the photo element (3), wherein $T_s$ is longer than $T_n$,
   wherein $T_{s2}$ is longer than $T_n$ and wherein the second integration gate (16) has such a delay to $T_o$ that the integration end point in time $T_{sd2}+T_{s2}$ is earlier than $T_{tof}$ or the integration start point in time $T_{sd2}$ is later than $T_{tof}+T_n$, or wherein $T_{s2}$ is longer than $T_n$ and wherein the second integration gate (16) has such a delay to $T_o$ that the integration start point in time $T_{sd2}$ is earlier than $T_{tof}$ and the integration end point in time $T_{sd2}+T_{s2}$ is later than $T_{tof}+T_n$;
   c) calculating the distance value $R$ from $U$ and $I_{in}$.

2. Method for illuminating an object (10) for a human user, or other vision system, to be able to view the object (10) with an unaided eye by means of an illumination device (1) that comprises a light source (2) for illuminating the object (10) and at least one photo element (3) that is adapted to capture the light emitted by the light source (2) after being back reflected from the object (10), to be activated during a temporal integration gate (15) and to output a signal value U at the end of the integration gate (15) with the signal value U being proportional to the energy of light arriving on the photo element (3) during its activation, and for determining a distance value R between the object (10) and the illumination device (1) with the steps:

   a) illuminating the object (10) with the light source (2) and switching the light intensity of the light source (2) at a point in time To from an intensity $I_{out,h}$ to an intensity $I_{out,l}$ being lower than $I_{out,h}$ as well as switching its intensity at a point in time $T_o+T_n$ back to $I_{out,h}$, wherein the light arriving on the photo element (3) corresponding to the emitted intensity $I_{out,h}$ has an intensity $I_{in,h}$ and the light arriving on the photo element (3) corresponding to the emitted intensity $I_{out,l}$ has an intensity $I_{in,l}$;
   b) outputting a signal value $U$ at the end of the integration gate (15) of the photo element (3), wherein the integration gate (15) has such a predetermined delay to $T_o$ that either $T_{tof}$ or $T_{tof}+T_n$ is between an integration start point in time $T_{sd}$ of the integration gate and an integration end point in time $T_{sd}+T_s$ of the integration gate, with $T_{tof}$ being the first point in time when light with the intensity $I_{in,l}$ arrives on the photo element (3), wherein $T_s$ is longer than $T_n$;

      b1) if $T_{tof}$ is between $T_{sd}$ and $T_{sd}+T_s$: outputting a signal value $U_2$ (28) at the end of a second integration gate (16) having an integration start point in time $T_{sd2}$ being later than $T_{sd}$ and an integration end point in time $T_{sd2} + T_s$, wherein, $T_{tof}$ is between $T_{sd2}$ and $T_{sd}+T_s$ and wherein $T_{tof}+T_n$ is later than $T_{sd2} + T_s$, or
      b1') if $T_{tof}+T_n$ is between $T_{sd}$ and $T_{sd}+T_s$: outputting a signal value $U_2$ at the end of a second integration gate (16) having an integration start point in time $T_{sd2}$ being later than $T_{sd}$ and an integration end point in time $T_{sd2} + T_s$, wherein $T_{tof} +T_n$ is between $T_{sd2}$ and $T_{sd} +T_s$ and wherein $T_{tof}$ is earlier than $T_{sd}$;

   c) calculating the distance value $R$ from $U$ and $U_2$.

3. Method according to any one of claims 1 to 2, wherein the light source (2) comprises light emitting diodes, VCSELs and/or lasers.

4. Method according to any one of claims 1 to 3, wherein the illumination device (1) comprises a CCD chip with an image intensifier and/or a CMOS chip that comprise the at least one photo element (3) .

5. Method according to any one of claims 1 to 4, wherein $I_{out,l}$ is zero.

**Patentansprüche**

1. Verfahren mit dem ein Objekt (10) so, dass ein menschlicher Benutzer oder ein anderes System zum Sehen das Objekt (10) mit bloßem Auge betrachten kann, mittels einer Beleuchtungsvorrichtung (1) beleuchtet wird, die eine Lichtquelle (2) zum Beleuchten des Objektes (10) und wenigstens ein Photo-Element (3) umfasst, das so eingerichtet ist, dass es das von der Lichtquelle (2) emittierte Licht einfängt, nachdem es von dem Objekt (10) zurückgestrahlt wurde, und während eines zeitlichen Integrations-Fensters (15) (temporal integration gate) aktiviert wird und an dem Ende des Integrations-Fensters (15) einen Signalwert $U$ ausgibt, wobei der Signalwert $U$ proportional zu der Energie von Licht ist, das auf das Photo-Element (3) während seiner Aktivierung auftrifft, und mit dem ein Wert eines Abstandes $R$ zwischen dem Objekt (10) und der Beleuchtungsvorrichtung (1) mit den folgenden Schritten bestimmt wird:

a) Beleuchten des Objektes (10) mit der Lichtquelle (2) und Umschalten der Lichtintensität der Lichtquelle (2) zu einem Zeitpunkt $T_0$ von einer Intensität $I_{out,h}$ auf eine Intensität $I_{out,i}$, die niedriger ist als $I_{out,h}$ sowie Umschalten ihrer Intensität zu einem Zeitpunkt $To+Tn$ zurück auf $I_{out,h}$, wobei das auf das Photo-Element (3) auftreffende Licht, das der emittierten Intensität $I_{out,h}$ entspricht, eine Intensität $I_{in,h}$ hat und das auf das Photo-Element (3) auftreffende Licht, das der emittierten Intensität $I_{out,l}$ entspricht, eine Intensität $I_{in,i}$ hat;
a1) Messen der Intensität $I_{in} = I_{in,h} - I_{in,i}$ mittels des Photo-Elementes (3) durch Messen eines Signalwertes $U_2$ innerhalb eines zweiten Integrations-Fensters (16);
b) Ausgeben eines Signalwertes $U$ an dem Ende des Integrations-Fensters (15) des Photo-Elementes (3), wobei das Integrations-Fenster (15) eine vorgegebene Verzögerung zu $T_o$ hat, so dass entweder $T_{tof}$ oder $T_{tof}$ + $T_n$ zwischen einem Integrations-Anfangszeitpunkt $T_{Sd}$ des Integrations-Fensters und einem Integrations-Endzeitpunkt $T_{Sd} + T_s$ des Integrations-Fensters liegt, wobei $T_{tof}$ der erste Zeitpunkt ist, zu dem Licht mit der Intensität $I_{in,i}$ auf dem Photo-Element (3) auftrifft, und $T_s$ länger ist als $T_n$, $T_{s2}$ länger ist als $T_n$ und das zweite Integrations-Fenster (16) eine Verzögerung zu $T_0$ hat, so dass der Integrations-Endzeitpunkt $T_{Sd2} + T_{s2}$ vor $T_{tof}$ liegt oder der Integrations-Anfangszeitpunkt $Tsd2$ nach $T_{tof} + T_n$ liegt, oder $T_{s2}$ länger ist als $Tn$ und das zweite Integrations-Fenster (16) eine Verzögerung zu $T_0$ hat, so dass der Integrations-Anfangszeitpunkt $T_{Sd2}$ vor $T_{tof}$ liegt und der Integrations-Endzeitpunkt $T_{Sd2} + T_{s2}$ nach $T_{tof} + T_n$ liegt;
c) Berechnen des Wertes des Abstandes $R$ anhand von $U$ und $I_{in}$.

2. Verfahren mit dem ein Objekt (10) so, dass ein menschlicher Benutzer oder ein anderes System zum Sehen das Objekt (10) mit bloßem Auge betrachten kann, mittels einer Beleuchtungsvorrichtung (1) beleuchtet wird, die eine Lichtquelle (2) zum Beleuchten des Objektes (10) und wenigstens ein Photo-Element (3) umfasst, das so eingerichtet ist, dass es das von der Lichtquelle (2) emittierte Licht einfängt, nachdem es von dem Objekt (10) zurückgestrahlt wurde, und während eines zeitlichen Integrations-Fensters (15) (temporal integration gate) aktiviert wird und an dem Ende des Integration-Fensters (15) einen Signalwert $U$ ausgibt, wobei der Signalwert $U$ proportional zu der Energie von Licht ist, das auf das Photo-Element (3) während seiner Aktivierung auftrifft, und mit dem ein Wert eines Abstandes R zwischen dem Objekt (10) und der Beleuchtungsvorrichtung (1) mit den folgenden Schritten bestimmt wird:

a) Beleuchten des Objektes (10) mit der Lichtquelle (2) und Umschalten der Lichtintensität der Lichtquelle (2) zu einem Zeitpunkt $T_0$ von einer Intensität $I_{out,h}$ auf eine Intensität $I_{out,i}$, die niedriger ist als $I_{out,h}$ sowie Umschalten ihrer Intensität zu einem Zeitpunkt $T_o+T_n$ zurück auf $I_{out,h}$, wobei das auf das Photo-Element (3) auftreffende Licht, das der emittierten Intensität $I_{out,h}$ entspricht, eine Intensität $I_{in,h}$ hat und das auf das Photo-Element (3) auftreffende Licht, das der emittierten Intensität $I_{out,l}$ entspricht, eine Intensität $I_{in,i}$ hat;
b) Ausgeben eines Signalwertes $U$ an dem Ende des Integrations-Fensters (15) des Photo-Elementes (3), wobei das Integrations-Fenster (15) eine vorgegebene Verzögerung zu $T_o$ hat, so dass entweder $T_{tof}$ oder $T_{tof}$ + $T_n$ zwischen einem Integrations-Anfangszeitpunkt $T_{Sd}$ des Integrations-Fensters und einem Integrations-Endzeitpunkt $T_{Sd} + T_s$ des Integrations-Fensters liegt, wobei $T_{tof}$ der erste Zeitpunkt ist, zu dem Licht mit der Intensität $I_{in,i}$ auf dem Photo-Element (3) auftrifft, wobei $T_s$ länger ist als $T_n$,

b1) wenn $T_{tof}$ zwischen $T_{sd}$ und $T_{Sd} + T_s$ liegt: Ausgeben eines Signalwertes $U_2$ (28) an dem Ende eines zweiten Integrations-Fensters (16), das einen Integrations-Anfangszeitpunkt hat, der nach $T_{Sd}$ liegt, und einen Integrations-Endzeitpunkt $T_{Sd2} + T_s$ hat, wobei $T_{tof}$ zwischen $T_{Sd2}$ und $T_{Sd} + T_s$ liegt und $T_{tof} + Tn$ nach $T_{Sd2} + T_s$ liegt, oder

b1'), wenn $T_{tof} + T_n$ zwischen $T_{sd}$ und $T_{Sd} + T_s$ liegt: Ausgeben eines Signalwertes $U_2$ an dem Ende eines zweiten Integrations-Fensters (16), das einen Integrations-Anfangszeitpunkt $T_{Sd2}$ hat, der nach $T_{Sd}$ liegt, und einen Integrations-Endzeitpunkt $T_{Sd2} + T_s$ hat, wobei $T_{tof} + T_n$ zwischen $T_{sd2}$ und $T_{Sd} + T_s$ liegt und $T_{tof}$ vor $T_{Sd}$ liegt,

c) Berechnen des Wertes des Abstandes $R$ anhand von $U$ und $U_2$.

**3.** Verfahren nach einem der Ansprüche 1 bis 2, wobei die Lichtquelle (2) Leuchtdioden, VCSEL und/oder Laser umfasst.

**4.** Verfahren nach einem der Ansprüche 1 bis 3, wobei die Beleuchtungsvorrichtung (1) einen CCD-Chip mit einem Bildverstärker und/oder einen CMOS-Chip umfasst, die/der das wenigstens eine Photo-Element (3) umfassen/umfasst.

**5.** Verfahren nach einem der Ansprüche 1 bis 4, wobei $I_{out,i}$ 0 beträgt.

## Revendications

**1.** Procédé d'éclairage d'un objet (10) pour qu'un utilisateur humain, ou un autre système de vision, puisse voir l'objet (10) à l'œil nu au moyen d'un dispositif d'éclairage (1) qui comprend une source lumineuse (2) pour éclairer l'objet (10) et au moins un photoélément (3) qui est adapté pour capturer la lumière émise par la source lumineuse (2) après avoir été réfléchie par l'objet (10), pour être activé pendant une porte d'intégration temporelle (15) et pour délivrer en sortie une valeur de signal $U$ à la fin de la porte d'intégration (15), la valeur de signal U étant proportionnelle à l'énergie de la lumière arrivant sur le photoélément (3) pendant son activation, et pour déterminer une valeur de distance $R$ entre l'objet (10) et le dispositif d'éclairage (1) avec les étapes consistant à :

a) éclairer l'objet (10) avec la source lumineuse (2) et commuter l'intensité lumineuse de la source lumineuse (2) à un instant $T_o$ d'une intensité $I_{out,h}$ à une intensité $I_{out,i}$ qui est inférieure à $I_{out,h}$ ainsi que commuter de nouveau son intensité à un instant $T_o + T_n$ vers $I_{out,h}$, où la lumière arrivant sur le photoélément (3) correspondant à l'intensité émise $I_{out,h}$ a une intensité $I_{in,h}$ et la lumière arrivant sur le photoélément (3) correspondant à l'intensité émise $I_{out,i}$ a une intensité $I_{in,i}$,

a1) mesurer l'intensité $I_{in} = I_{in,h} - I_{in,i}$ au moyen du photoélément (3) en mesurant une valeur de signal $U_2$ dans une deuxième porte d'intégration (16) ;

b) délivrer en sortie une valeur de signal $U$ à la fin de la porte d'intégration (15) du photoélément (3), dans lequel la porte d'intégration (15) a un retard prédéterminé par rapport à $T_o$ tel que soit $T_{tof}$ soit $T_{tof} + T_n$ est compris entre un instant de début d'intégration $T_{sd}$ de la porte d'intégration et un instant de fin d'intégration $T_{sd} + T_s$ de la porte d'intégration, $T_{tof}$ étant le premier instant où la lumière avec l'intensité $I_{in,i}$ arrive sur le photoélément (3), dans lequel $T_s$ est plus long que $Tn$,

dans lequel $T_{s2}$ est plus long que $T_n$ et dans lequel la deuxième porte d'intégration (16) a un retard par rapport à $T_o$ tel que l'instant de fin d'intégration $T_{sd2} + T_{s2}$ est antérieur à $T_{tof}$ ou l'instant de début d'intégration $T_{sd2}$ est postérieur à $T_{tof} + T_n$, ou dans lequel $T_{s2}$ est plus long que $T_n$ et dans lequel la deuxième porte d'intégration (16) a un retard par rapport à $T_o$ tel que l'instant de début d'intégration $T_{sd2}$ est antérieur à $Ttof$ et l'instant de fin d'intégration $T_{sd2} + T_{s2}$ est postérieur à $T_{tof} + T_n$ ;

c) calculer la valeur de distance $R$ à partir de $U$ et $I_{in}$.

**2.** Procédé d'éclairage d'un objet (10) pour qu'un utilisateur humain, ou un autre système de vision, puisse voir l'objet (10) à l'œil nu au moyen d'un dispositif d'éclairage (1) qui comprend une source lumineuse (2) pour éclairer l'objet (10) et au moins un photoélément (3) qui est adapté pour capturer la lumière émise par la source lumineuse (2) après avoir été réfléchie par l'objet (10), pour être activé pendant une porte d'intégration temporelle (15) et pour délivrer en sortie une valeur de signal U à la fin de la porte d'intégration (15), la valeur de signal U étant proportionnelle à l'énergie de la lumière arrivant sur le photoélément (3) pendant son activation, et pour déterminer une valeur de distance R entre l'objet (10) et le dispositif d'éclairage (1) avec les étapes consistant à :

a) éclairer l'objet (10) avec la source lumineuse (2) et commuter l'intensité lumineuse de la source lumineuse (2) à un instant To d'une intensité $I_{out,h}$ à une intensité $I_{out,i}$ qui est inférieure à $I_{out,h}$ ainsi que commuter de nouveau son intensité à un instant $T_o+T_n$ vers $I_{out,h}$, où la lumière arrivant sur le photoélément (3) correspondant à l'intensité émise $I_{out,h}$ a une intensité $I_{in,h}$ et la lumière arrivant sur le photoélément (3) correspondant à l'intensité émise $I_{out,i}$ a une intensité $I_{in,i}$ ;

b) délivrer en sortie une valeur de signal $U$ à la fin de la porte d'intégration (15) du photoélément (3), dans lequel la porte d'intégration (15) a un retard prédéterminé par rapport à $T_o$ tel que soit *Ttof* soit $T_{tof}+T_n$ est compris entre un instant de début d'intégration $T_{sd}$ de la porte d'intégration et un instant de fin d'intégration $T_{sd}+T_s$ de la porte d'intégration, *Ttof* étant le premier instant où la lumière avec l'intensité $I_{in,i}$ arrive sur le photoélément (3), dans lequel $T_s$ est plus long que $T_n$ ;

b1) si $T_{tof}$ est compris entre $T_{sd}$ et $T_{sd}+T_s$ : délivrer en sortie une valeur de signal $U_2$ (28) à la fin d'une deuxième porte d'intégration (16) ayant un instant de début d'intégration $T_{sd2}$ qui est postérieur à $T_{sd}$ et un instant de fin d'intégration $T_{sd2}+T_s$, où $T_{tof}$ est compris entre $T_{sd2}$ et $T_{sd}+T_s$ et où $T_{tof}+T_n$ est postérieur à $T_{sd2}+T_s$, ou

b1') si $T_{tof}+T_n$ est compris entre $T_{sd}$ et $T_{sd}+T_s$ : délivrer en sortie une valeur de signal $U_2$ à la fin d'une deuxième porte d'intégration (16) ayant un instant de début d'intégration $T_{sd2}$ qui est postérieur à $T_{sd}$ et un instant de fin d'intégration $T_{sd2}+T_s$, où $T_{tof}+T_n$ est compris entre $T_{sd2}$ et $T_{sd}+T_s$ et où $T_{tof}$ est antérieur à $T_{sd}$;

c) calculer la valeur de distance $R$ à partir de $U$ et $U_2$.

3. Procédé selon l'une quelconque des revendications 1 et 2, dans lequel la source lumineuse (2) comprend des diodes électroluminescentes, des VCSEL et/ou des lasers.

4. Procédé selon l'une quelconque des revendications 1 à 3, dans lequel le dispositif d'éclairage (1) comprend une puce CCD avec un intensificateur d'image et/ou une puce CMOS qui comprennent l'au moins un photoélément (3).

5. Procédé selon l'une quelconque des revendications 1 à 4, dans lequel $I_{out,i}$ vaut zéro.

Fig. 1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011081384 A1
- DE 19833207 A1
- US 7212278 B2
- DE 19741887 A1